# EUROPEAN PATENT APPLICATION

(11) **EP 4 586 075 A1**
(43) Date of publication of application: **16.07.2025**
(21) Application number: 24209640.2
(22) Date of filing: 29.10.2024
(51) Int. Cl.: G06F 8/30, G06F 8/36, G06F 8/38, G06F 8/41

(54) **USER-INTERFACE DYNAMICALLY EXTENSIBLE DEVELOPMENT METHOD AND SYSTEM BASED ON SOFTWARE PLATFORM**

(30) Priority: 09.01.2024 CN 202410028558
(71) Applicant: Shanghai Tosun Technology Ltd., Shanghai 201804 (CN)
(72) Inventor: Liu, Chu, Shanghai, 200000 (CN); Xie, Yueyin, Shanghai (CN); Mo, Mang, Shanghai (CN)
(74) Representative: Sun, Yanan

(57) **Abstract**

A user-interface dynamically extensible development method and system based on a software platform, comprising: dynamically extracting, by an interface manager, type information relating to forms in a software platform runtime library during the operation of the software platform, inheriting the type information to form a dynamically-derived basic form, generating software platform import codes simultaneously by interface manager, generating one-time form dynamic creation codes based on the type information in the software platform import codes, and storing the software platform import codes with the one-time form dynamic creation codes into a file of one-time derived codes.

## Description

### CROSS REFERENCE TO RELATED APPLICATIONS

This application is based upon and claims foreign priority to Chinese Patent Application No. CN202410028558.4, filed on January 9, 2024, the entire contents of which are incorporated herein by reference.

### TECHNICAL FIELD

The present disclosure relates to the field of vehicular software development technologies, and in particular to a user-interface dynamically extensible development method and system based on software platform.

### BACKGROUND

In the current markets, software platforms for performing secondary development on user interfaces only allow users to use its provided empty forms and control list to perform development. For example, the users may drag a control from the control list into the empty forms and set properties, associate control events and write event codes so as to complete extension development.

### SUMMARY

The present disclosure provide a method, comprising:
during the operation of a software platform, dynamically extracting, by an interface manager,
type information relating to forms in a software platform runtime library, and inheriting the type information to form a dynamically-derived basic form, and at the same time, generating, by the interface manager, software platform import codes; and,
based on the type information in the software platform import codes, generating one-time form dynamic creation codes and storing the software platform import codes and the one-time form dynamic creation codes into a file of one-time derived codes.

The summary of the present disclosure aims to provide brief descriptions for the subjects of the specification. Thus, it should be understood that the above features are only illustrative and shall not be interpreted as narrowing the scope or essence of the subject of the specification in any way.

Other features, aspects and advantages of the subjects of the present disclosure will become apparent by way of the specific embodiments, drawings and claims.

### BRIEF DESCRIPTION OF THE DRAWINGS

In order to more clearly describe the technical solutions in the specific embodiments of the present disclosure and in the prior arts, the drawings required for descriptions of the specific embodiments, or the prior arts will be briefly introduced below. Apparently, the drawings described herein are merely some embodiments of the present disclosure. Those skilled in the arts can obtain other drawings based on these drawings without making creative work.
FIG. 1 is a schematic diagram illustrating steps of a user-interface dynamically extensible development method based on software platform according to one or more embodiments of the present disclosure.
FIG. 2 is a schematic diagram illustrating an interface manager according to one or more embodiments of the present disclosure.
FIG. 3 is a schematic diagram illustrating a dynamically-derived basic form after dynamic derivation according to one or more embodiments of the present disclosure.
FIG. 4 is a partial control list according to one or more embodiments of the present disclosure.
FIG. 5 shows some items with design form property according to one or more embodiments of the present disclosure.
FIG. 6 shows some items with control property according to one or more embodiments of the present disclosure.
FIG. 7 shows a graphics display form entitled "Graphics 1" according to one or more embodiments of the present disclosure.
FIG. 8 is a screenshot image with a target file name "C:\screenshots\graphics.png" according to one or more embodiments of the present disclosure.
FIG. 9 is a principle block diagram illustrating a user-interface dynamically extensible development system based on software platform according to one or more embodiments of the present disclosure.
FIG. 10 is a principle block diagram illustrating an electronic device according to one or more embodiments of the present disclosure.

### DETAILED DESCRIPTION OF THE EMBODIMENTS

In order to more clearly describe the technical solutions in the embodiments of the present disclosure or in the prior arts, the drawings required for descriptions of the specific embodiments, or the prior arts will be briefly introduced. Apparently, the drawings described hereunder are only some embodiments of the present disclosure. Those skilled in the arts can obtain other drawings based on these drawings without making creative work.

In the current markets, software platforms for performing secondary development on user interfaces only allow users to use its provided empty forms and control list to perform development. For example, the users may drag a control from the control list into the empty forms and set properties, associate control events and write event codes so as to complete extension development. In this method, the users have to use the empty forms and a limited number of controls provided by the software platform and cannot perform extension development based on the existing forms of the software platform, such as graphics drawing form and system message form and nor design an all-new control not belonging to the control list from scratch. In this case, the extension design of the user interfaces will be largely limited by the software platform itself and the user interface designed has single pattern, simple controls, simple functions, unable to carry out more innovative designs.

Therefore, at least one embodiment provides a user-interface dynamically extensible development method based on software platform, including:
during the operation of the software platform, dynamically extracting, by an interface manager, type information relating to forms in a software platform runtime library, and inheriting the type information to form a dynamically-derived basic form, and at the same time, generating, by the interface manager, software platform import codes; and, based on the type information in the software platform import codes, generating one-time form dynamic creation codes and storing the software platform import codes and the one-time form dynamic creation codes into a file of one-time derived codes.

Various non-limiting implementations of the embodiments of the present disclosure are detailed below in combination with drawings.

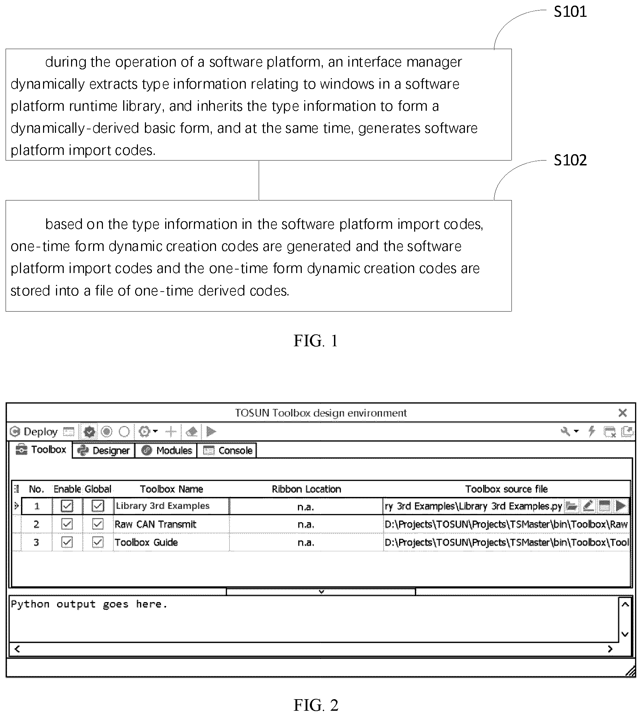

As shown in FIG.1, some embodiments provide a user-interface dynamically extensible development method based on software platform. The method includes the following steps.

At step S101, during the operation of the software platform, an interface manager dynamically extracts type information relating to forms in a software platform runtime library, and inherits the type information to form a dynamically-derived basic form, and at the same time, generates software platform import codes.

At step S102, based on the type information in the software platform import codes, one-time form dynamic creation codes are generated and the software platform import codes and the one-time form dynamic creation codes are stored into a file of one-time derived codes.

In some embodiments, when N+1 derivative modifications are performed on a property and/or call event of the dynamically-derived basic form, a file of (N+1)-time derived codes is created, wherein the file of (N+1)-time derived codes includes file import codes of N-time derived codes, (N+1)-time form dynamic creation codes and/or user codes, and N≥1; and, the file of (N+1)-time derived codes is run to form a (N+1)-time derived user interface.

In some embodiments, during the operation of the software platform, the method of dynamically extracting, by the interface manager, the type information relating to the forms in the software platform runtime library includes:
introducing a run-time type information (RTTI) unit, namely, before using the RTTI unit, introducing a system-run-time type information (e.g. 'System.Rtti' ) unit into internal implementation codes of the software platform to use a class and a method relating to the forms in the RTTI unit;
using a class of "contextual type of run-time type information" (e.g. 'TRttiContext') in the system-run-time type information unit to create one context object, and then by a method of "obtaining a type of the run-time type information" (e.g. 'GetRttiType'), obtaining an object of "the run-time type information" (e.g. 'TRttiType') of the forms; and
by the object of "the run-time type information" (e.g. 'TRttiType') of the forms, using a method of "obtaining property" (e.g. 'GetProperties') to obtain property information of the forms and using a method of "obtaining method" (e.g. 'GetMethods') to obtain method information of the forms.

In this embodiment, during the operation of the software platform, type information relating to forms in a software platform runtime library is dynamically extracted and inherited to form a dynamically-derived basic form, so as to achieve dynamic derivation. It is to be interpreted that the dynamic derivation refers to, in a running process of programs, dynamically extracting various type information of the basic forms in the running environment of the programs and based on these type information of the basic forms, dynamically creating new form types which are derived from the above extracted basic form types and can be used to create new form objects. Compared with static derivation, the dynamic derivation can dynamically create an object, dynamically call a method, dynamically access a property, achieve dynamic type conversion and compatibility check, traverse an enumeration and set type, and self-define a property. That is, the dynamic derivation can achieve more flexible and dynamic programming, enabling the codes to have higher extensibility and higher maintainability. When the dynamically extensible development method in this embodiment is applied to a user interface development of the software platform, the user can carry out extension development on the existing forms in the software platform without modifying software platform codes and calling a compiler to compile software. The developed forms not only have various functions endowed by the software platform but also are dedicated forms highly customized by users, enabling the user-interface development based on software platform to be more efficient and more concise. Specifically, the dynamic extraction refers to, in a running process of the programs, dynamically extracting the type information of the forms (in this embodiment, refers to the forms in the software platform runtime library) from a running environment of the programs. If dynamic extraction is required, the programs are required to have RTTI mechanism which is explained as follows: the Run-Time Type Information (RTTI) refers to a mechanism of obtaining relevant type information during a program running process. The mechanism allows obtaining detailed information such as class, interface, method and property and the like during running, including name, type and access modification symbol and the like.

Specifically, the type information of forms refers to basic information of the forms in the software platform runtime library, such as type name information, parent class information, property information, method information, field information, constructor, destructor, interface information and enumeration information of the forms.

As shown in FIG. 2, the interface manager is used to create, list, design, store, import, export, encrypt and run a user interface so as to achieve full management over the designed user interface.

A method of dynamically extracting, by the interface manager, the type information relating to the forms in the software platform runtime library includes:
by calling the obtaining type function in the contextual object provided in the "system-run-time type information" unit, obtaining the type information relating to the forms in the software platform runtime library.

Based on the obtained type information, information such as field, property and method related to the forms is further obtained.

The inheriting and deriving method is described below:
Based on the obtained form information, a new derived form type is defined, namely, a dynamically-derived basic form which is used to inherit the type information relating to the forms in the software platform runtime library. That is, the dynamically-derived basic form can call a protected and public method of the inherited type information relating to the forms in the software platform runtime library and can read and write its properties and its fields and the like.

Then, based on the defined dynamically-derived basic form, the software platform allows a user to add a new field, method and property to the dynamically-derived basic form, and control the behaviors of the dynamically-derived basic form. In this way, the function of dynamically inheriting and deriving a new form based on the obtained type information relating to the forms of the software platform can be achieved.

With one case, detailed descriptions are made below on the method of, during the operation of the software platform, dynamically extracting, by the interface manager, the type information relating to the forms in the software platform runtime library and inheriting the type information to form the dynamically-derived basic form.

Dynamic derivation is performed on the basic forms in the software platform to form a new form type so as to create a new form object, which is the dynamically-derived basic form. The following steps will be required.

An RTTI unit is introduced: before the RTTI unit is used, it is required to introduce the 'System.Rtti' unit into the internal implementation codes of the software platform, so as to use a class and a method relating to the basic forms in the RTTI unit.

Form type information is obtained: 'TRttiContext' class is used to create one contextual object, and then a ' TRttiType' object of the basic forms is obtained by using ' GetRttiType' method. The corresponding 'TRttiType' object can be obtained by using the type name or instance of the basic forms.

Form property and method are extracted: based on the 'TRttiType' object of the basic forms, the property information of the basic forms is obtained by using the 'GetProperties' method, and the method information of the basic forms is obtained using the 'GetMethods' method. The property and method list of the basic forms may be traversed to obtain information such as name and type of the properties of the basic forms and obtain information such as name and parameter of the methods of basic forms.

Based on the extracted type information, a one-time drivation type is dynamically created and the extracted type information of the basic forms is inherited to form form sub-types which are instantiated to obtain the dynamically-derived basic form. In the process of forming the dynamically-derived basic form, the generated software platform import codes and the one-time form dynamic creation codes generated based on the type information in the software platform import codes are stored into a file of one-time derived codes.

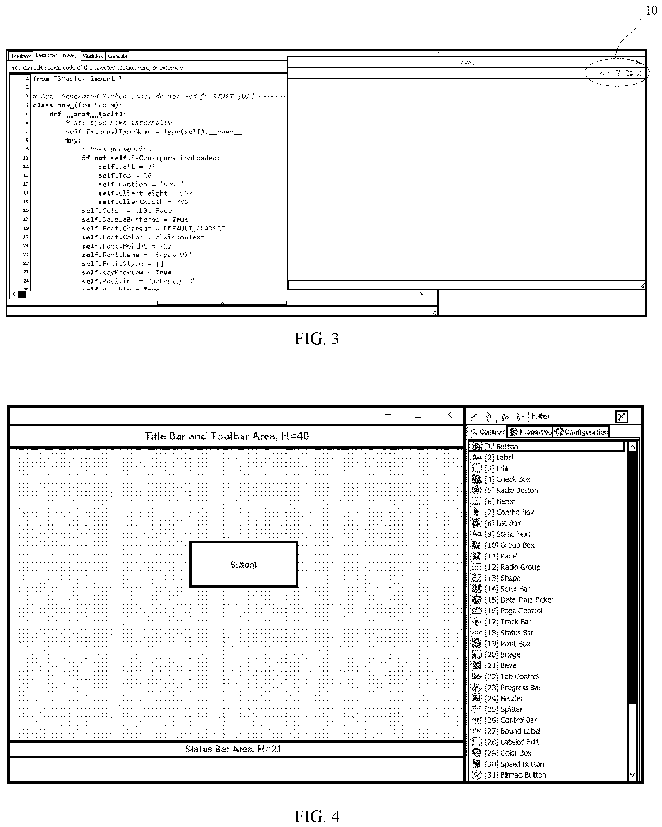

As shown in FIG. 3, at the left in FIG. 3 is the stored file of one-time derived codes, where frmTSForm is the basic form type of the software platform, new_ is a form sub-type derived one time from the basic form type. At the right in FIG. 3 is a dynamically-derived basic form obtained by instantiating the form sub-type new_. It can be seen that due to inheritance of the basic form type frmTSForm, the new dynamically-derived basic form has several buttons 10 and drop-down menus at the right upper corner of the tool column in the basic form type as well as the functions of corresponding button click events and drop-down menu operation events.

In some embodiments, the user codes refer to codes written by the user. Since the file of the one-time derived codes is derived based on the construction language of the software platform to form the existing contents of the software platform, the file of the one-time derived codes is un-editable and does not include the user codes. When derivative modification is performed on the property and/or call event of the dynamically-derived basic form, the user can modify the property and/or call event of the dynamically-derived basic form by writing codes. Therefore, the file of (N+1)-time derived codes may include the user codes.

In some embodiments, the user may also modify the property and/or call event of the dynamically-derived basic form by adding a callable control to the dynamically-derived basic form; the setting of the callable control is a control list formed by performing generalization and summarization on the use habits of the user by the software platform system. As shown at the right in FIG. 4, the controls in the control list are referred as to callable controls. The user may embed these callable controls in the control list into the dynamically-derived basic form, for example, by drag or the like.

In some embodiments, after derivation behavior is completed, the corresponding derived codes file is run to form a derived user interface interacting with the user.

In some embodiments, the software platform import codes may be python code language, including:
from software platform name import * or import software platform name.

In some embodiments, the software platform import codes may also be C or C++code language, including:
#include "software platform name".

With one case as an example, detailed descriptions are made below on the specific process in which the type information is inherited to form the dynamically-derived basic form and derivative modification is performed on the property and/or call event of the dynamically-derived basic form.

If the form type is TForm in the type information of the basic form, the software platform user uses the form design tool provided by the software platform to inherit the form type TForm and form a form sub-type TBaseForm, where the form of the sub-type is instantiated to form the dynamically-derived basic form.

If one top-displayed help button is added to the dynamically-derived basic form, one button control is embedded into the dynamically-derived basic form, and then the software platform user clicks on the codes generation button on the form design tool so as to obtain the form dynamic creation codes of the dynamically-derived basic form and the corresponding control creation codes:

```
 class TBaseForm(TForm):
 def _init_(self):
 self.btnHelp = Button(self)
 self.btnHelp.Parent = self
 self.btnHelp.Align = "alTop"
 self.btnHelp.Caption = Help
```

where "def _init_(self):" defines a form creation event function, and its property can be modified by automatically calling the event. In the above case, by using a button creation function "Button(self)", the property "btnHelp" of the dynamically-derived basic form is assigned; afterwards, the button control property "Parent" is set to this dynamically-derived basic form such that this button control can be displayed on the dynamically-derived basic form; next, the button control property "Align" is set to "alTop" such that this button control can be aligned on the top of the dynamically-derived basic form; next, the button control property "Caption" is set to "Help" such that the title of the button control is displayed as "Help", i.e. help information.

In an optional implementation of some embodiments, the property includes: visual elements of a form and a control and child elements of a form and a control; the child element is a function variable and/or behavior characteristic variable of a form and a control; the call event includes one or more of a user interaction event, a life cycle event of a form and a control, a function event of a form and a control.

In some embodiments, the property also includes: a visual element and a child element of a control; the child element is a function variable and/or behavior characteristic variable of a control; the call event includes one or more of a user interaction event, a control life cycle event, a control function event.

In some embodiments, the visual element of the form includes but not limited to, for example, a color of the form body, a width of the form body, a height of the form body, text information displayed in the form body and a coordinate, a transparency, an icon and a cursor type of the form body in a main screen and the like; the visual element of the control includes but not limited to, for example, a color of the control, a width of the control, a height of the control, text information displayed in the control, and a coordinate, a transparency, an icon and a cursor type of the control in the parent control, and the like.

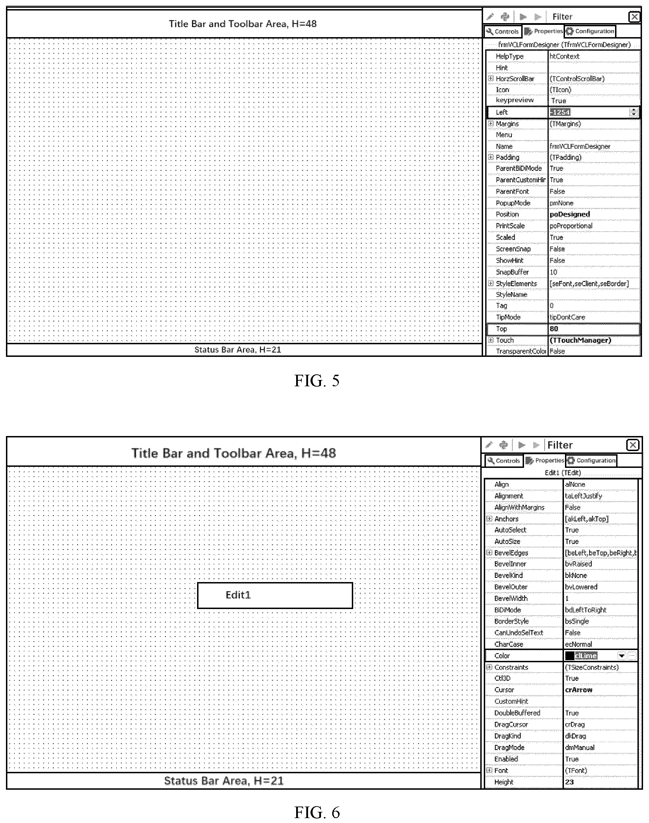

As shown in FIG. 5, the right property items display partial properties of the form body.

As shown in FIG. 6, the right property items display partial properties of the control.

In some embodiments, the function variable of the form and the control each includes but not limited to, for example, font, drag type, double buffering mark, right key menu, help file, label value and the like; the behavior characteristic variable of the form and the control each includes but not limited to, for example, activation state, visibility, alignment mode and automatic adapting size and the like.

In some embodiments, the user interaction event includes but not limited to, for example, click event, cursor key down event, cursor key up event, cursor enter event, cursor move event, cursor leave event, keyboard down event, keyboard up event and the like; the life cycle events of the form and the control each include but not limited to, for example, creation event, destruction event and the like; the function events of the form and the control each includes but not limited to, for example, timing event, display event, hiding event, size change event and drawing event and the like.

In some embodiments, the method of performing derivative modifications on the property and/or call event of the dynamically-derived basic form includes: writing the property of the form by assignment and/or associating the event handle function with the call event of the form by assignment and forming a call relationship with the user codes.

In some embodiments, the method of performing derivative modifications on the property and/or call event of the dynamically-derived basic form includes: writing the property of the control by assignment and/or associating the event handle function with the call event of the control by assignment and forming a call relationship with the user codes.

With one case as an example, detailed descriptions are made below on the specific process of writing the property of the form by assignment and forming the call relationship with the user codes.

If the form type is TForm in the type information of the basic form, the software platform user uses the form design tool provided by the software platform to inherit the form type TForm and form a form sub-type TBaseForm, where the form of the sub-type is instantiated to form the dynamically-derived basic form. In the form design tool, the software platform user modifies the Tag property of the dynamically-derived basic form to 1, and then clicks the code generation button to obtain the form dynamic creation codes of the dynamically-derived basic form:

```
class TBaseForm(TForm):
 def _init_(self):
 self. Tag = 1
 
```

where "self.Tag = 1" represents writing the Tag property of the dynamically-derived basic form by assignment.

In this case, by the user codes added by the user, the property and/or call event of the dynamically-derived basic form may be modified. For example, in the user codes, the user may determine a corresponding action based on the Tag property of the dynamically-derived basic form. For example, when the Tag is 1, the title column text of the dynamically-derived basic form is set to "Run Mode = 1", and the user codes are as follows:

```
 if 1 == self. Tag:
 self.Caption = "Run Mode = 1"
```

where "if 1 == self.Tag:" represents that the user codes form a call relationship with the property "Tag" of the dynamically-derived basic form to call the property "Tag" of the dynamically-derived basic form and further determine a next action of the dynamically-derived basic form. Continued from the above case, detailed descriptions are made below on the specific process of associating the event handle function with the call event of the form by assignment and forming the call relationship with the user codes.

In the user codes, the user may associate the display event of the dynamically-derived basic form to update the title column text of the dynamically-derived basic form in the display event, and the user codes are as follows:

```
 def on_show(Sender):
 self.Caption = "Form displayed"
 self.OnShow = on_show
```

where "def on_show(Sender):" is a user-defined event handle function. In this function, the user re-sets the title column text of the dynamically-derived basic form. The assignment statement "self.OnShow = on_show" represents that the user associates the self-defined event handle function by assignment to the display event of the dynamically-derived basic form.

With one case as an example, detailed descriptions are made below on the specific process of writing the property of the control by assignment and forming the call relationship with the user codes.

If the form type is TForm in the type information of the basic form, the software platform user uses the form design tool provided by the software platform to inherit the form type TForm and form a form sub-type TBaseForm, where the form of the sub-type is instantiated to form the dynamically-derived basic form. In the form design tool, the software platform user adds one button btnTest to the dynamically-derived basic form and changes the Tag of the button btnTest to 1, and then clicks the code generation button on the form design tool to obtain the form dynamic creation codes of the dynamically-derived basic form and the control creation codes of the button btnTest:

```
 class TBaseForm(TForm):
 def _init_(self):
 self.btnTest = Button(self)
 self.btnTest.Tag = 1
 
```

where "self.btnTest = Button(self)" is control creation codes of the button btnTest; and "self.btnTest.Tag = 1" represents writing the Tag property of the button by assignment.

In this case, by the user codes added by the user, the property and/or call event of the control may be modified. For example, in the user codes, the user may determine a corresponding action based on the Tag property of the button btnTest. For example, when the Tag is 1, the text of the button btnTest is set to "Run Mode = 1" and the user codes are as follows:

```
 if 1 == self.btnTest.Tag:
 self.btnTest.Caption = "Run Mode = 1"
```

wherein "if 1 == self.btnTest.Tag:" represents that the user codes form a call relationship with the property "Tag" of the button btnTest to call the property "Tag" of the button btnTest and further determine a next action of the button btnTest.

In an optional implementation of some embodiments, writing the property of the form by assignment and forming the call relationship with the user codes include:
calling a function library of the form to construct a corresponding parameter and introduce it into an API function.

With one case as an example, detailed descriptions are made below on the specific process of calling the function library of the form to construct the corresponding parameter and introduce it into the API function.

In the form design tool, the user sets the width, height, left margin and upper margin of the dynamically-derived basic form, for example, the width=200, the height=100, the left margin=50 and the upper margin=30. Thus, the form dynamic creation codes fragment generated accordingly is as follows:

```
 self.SetBounds(50, 30, 200, 100)
 
```

wherein "SetBounds" is one of the functions of the dynamically-derived basic form, with its function to set the position and size of the dynamically-derived basic form in the main screen and carry four parameters. For example, the list of the corresponding parameter names and parameter values is as follows:

| Parameter name | Parameter value |
|---|---|
| Left | 50 |
| Top | 30 |
| Width | 200 |
| Height | 100 |

When the function "SetBounds" is called, the position of the dynamically-derived basic form is set to 50 pixels from the left side of the main screen, and 30 pixels from the top of the main screen; further, its width is set to 200 pixels and its height is set to 100 pixels.

As an optional implementation of some embodiments, writing the property of the control by assignment and forming the call relationship with the user codes include:
calling a function library of the control to construct a corresponding parameter and introduce it into an API function.

With one case as an example, detailed descriptions are made below on the specific process of calling the function library of the control to construct the corresponding parameter and introduce it into the API function.

In the form design tool, the user adds three items to a list box control (TListBox), which are "Item 1", "Item 2" and "Item 3". Thus, the control creation codes fragment generated accordingly is as follows:
self.ListBox1.Items.Assign([Item 1,Item 2,Item 3]) wherein "Items.Assign" is one of the functions of the list box control, with its function to set the contents of the list box and carry one parameter, the contents of which are a character string array. When the function is called, the contents of the list box control are updated to three lines of texts, which are Item 1, Item 2 and Item 3 respectively.

As an optional implementation of some embodiments, writing the property of the form by assignment and forming the call relationship with the user codes include:
calling a function library of the user to introduce the property of the form as a parameter into an API function.

With one case as an example, detailed descriptions are made below on the specific process of calling the function library of the user to introduce the property of the dynamically-derived basic form as a parameter into the API function.

In the function library "userlib" of the user, there is one API function for setting the form as displayed foremost, with its python prototype defined below:

```
 def set_top_most(AHandle: int) -> None: "set form to top most"
```

This function has one parameter which is a form handle. When the function library of the user is used, it is firstly required to import the function library to the user codes. The codes are as follows:

```
 import userlib
```

Secondly, the user adds call codes for calling the user function to the user codes, as shown below:

```
 userlib.set_top_most(self.Handle)
```

When the user function is called, the handle of the dynamically-derived basic form is introduced into the user function, namely, the dynamically-derived basic form is set as displayed foremost. As an optional implementation of some embodiments, writing the property of the control by assignment and forming the call relationship with the user codes include:
calling a function library of the user to introduce the property of the control as a parameter into an API function.

With one case as an example, detailed descriptions are made below on the specific process of calling the function library of the user to introduce the property of the control as a parameter into the API function.

In the function library "userlib" of the user, there is one API function for setting a text box pattern, with its python prototype defined below:

```
 def set_edit_style(AEdit: TEdit) -> None: "set text edit style"
```

This function has one parameter which is a text box object. When the function library of the user is used, it is firstly required to import the function library into the user codes. The codes are as follows:

```
 import userlib
```

Secondly, the user adds call codes for calling the user function to the user codes, as shown below:

```
 userlib.set_edit_style(self.edtTitle)
```

When the user function is called, the text box object edtTitle is introduced into the user function and the front style of the text box is modified by the function.

As an optional implementation of some embodiments, writing the property of the form by assignment and forming the call relationship with the user codes include:
calling a function library of the software system to introduce the property of the form as a parameter into an API function.

With one case as an example, detailed descriptions are made below on the specific process of calling the function library of the software system to introduce the property of the dynamically-derived basic form as a parameter into the API function.

In this case, the dynamically-derived basic form is a graphics display form provided by the software platform, and the graphics display form refers to a form provided by the software platform to display a graphics curve.

In the function library "app" of the software system, there is one function of form screenshot, with its python prototype defined below:

```
 deftake_screenshot(ACaption: str, AFileName: str) -> None: "take screenshot of specific form
 and save it to disk"
```

This function has two parameters: one parameter is a form title name of text form, used to search for a corresponding design form in the software platform; the other parameter is a target file name stored in a harddisk drive in the form of screenshot picture file. When the function library of the software system is used, it is firstly required to import the software platform name into the user codes. The codes are as follows:

```
 import software_platform_name
```

Secondly, the user adds call codes for calling the software system function to the user codes, as shown below:

```
 app.take_screenshot("Graphics 1", r"C:\screenshots\graphics.png")
```

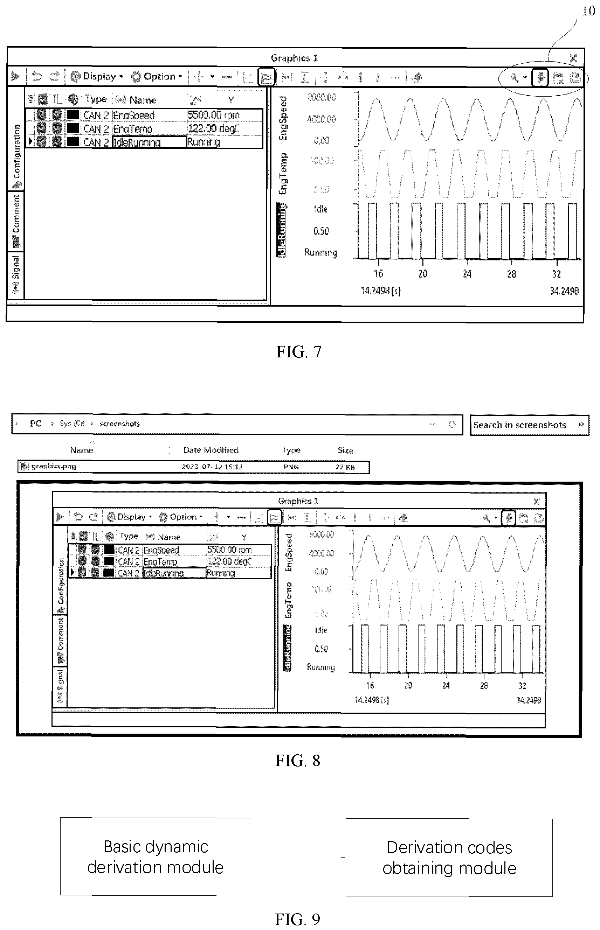

As shown in FIGS. 7 and 8, when the software system function is called, the title name "Graphics 1" of the graphics display form and the target file name "C:\screenshots\graphics.png" are introduced into the software system function, and the screenshot information of the graphics display form will be stored in the hard disk drive. Furthermore, as shown in FIG. 7, the derived graphics display form also has several buttons 10 and drop-down menus at the upper right corner of the tool column in the basic form type, as well as the corresponding functions of the button click event and the drop-down menus operation event.

As an optional implementation of some embodiments, writing the property of the control by assignment and forming the call relationship with the user codes include:
calling a function library of the software system to introduce the property of the control as a parameter into an API function.

With one case as an example, detailed descriptions are made below on the specific process of calling the function library of the software system to introduce the property of the control as a parameter into the API function.

In the function library "app" of the software system, there is one function for setting a system variable in the software platform, with its python prototype defined below:

```
 def set_system _var_generic(AName: str, AValue: str) -> None: "set system variable value from
 string"
```

The function has two parameters: one parameter is a system variable name, used to search for a corresponding system variable in the software platform; the other parameter is a target set value in the form of character string, used to set the corresponding system variable value to the target set value. When the function library of the software system is used, it is firstly required to import the software platform name into the user codes. The codes are as follows:

```
 import software_platform_name
```

Secondly, the user adds call codes for calling the software system function to the user codes, as shown below:

```
 app.set_ system_var_generic(sysvarl, self.Button1.Caption)
```

The introduced first parameter "sysvar1" specifies the name of the corresponding system variable as "sysvar1".

The introduced second parameter is to take the value of the character string of the property "Caption" of the control "Button1" as the target set value of the corresponding system variable. If the value of the character string of the property "Caption" of the control "Button1" is "3.5", after the software system function is called, the value of the system variable "sysvar1" is rewritten to "3.5".

As an optional implementation of some embodiments, writing the property of the form by assignment and forming the call relationship with the user codes include:
calling a function library of the code language to introduce the property of the form as a parameter into an API function.

With one case as an example, detailed descriptions are made below on the specific process of calling the function library of the code language to introduce the property of the form as a parameter into the API function.

With python language as an example, the user adds call codes of the code language function to the user codes, as shown below:

```
 self. Memo 1. Text = dir(self.Icon)
```

wherein "dir" is a function provided by the code language, which is used to obtain all contents of a class or a module, including variables, methods, functions and classes and the like. When the code language function is called, by using the introduction parameter "self.Icon", all contents of the icon property of the dynamically-derived basic form are read into a multiline text box "Memo1".

As an optional implementation of some embodiments, writing the property of the control by assignment and forming the call relationship with the user codes include:
calling a function library of the code language to introduce the property of the control as a parameter into an API function.

With one case as an example, detailed descriptions are made below on the specific process of calling the function library of the code language to introduce the property of the control as a parameter into the API function.

With python language as an example, the user adds call codes of the code language function to the user codes, as shown below:

```
 print(self.Button1.Caption)
```

wherein "print" is a function provided by the code language, used to print a character string of the corresponding parameter in the software system.

When the code language function is called, the property "Caption" of the control "Button1", namely, the label content of the control "Button1", is printed by using the introduction parameter "Button1.Caption" to the software system.

In conclusion, the property and/or call event of the dynamically-derived basic form and the control embedded into the dynamically-derived basic form are modified to realize modification derivation on the dynamically-derived basic form. Further, the user may also perform multiple modification derivations on the dynamically-derived basic form based on use requirements. Furthermore, each modification derivation is performed on the last modification derivation. For example, the complete vehicle plant can continue adding complete-vehicle-related important signals in the graphics display form subsequent to one modification derivation for the dynamically-derived basic form to display, for example, vehicle speed, wheel speed and the like at fixed positions of the graphics display form, so as to form a graphics display form formed by two modification derivations. Different part manufacturers can, based on the graphics display form formed by two modification derivations distributed by the complete vehicle plant, continue adding special signals belonging to respective part manufacturers to the corresponding forms to display, for example, braking deceleration and yaw velocity and the like at fixed positions of the graphics display form formed by two modification derivations, so as to form a graphics display form formed by three or more modification derivations.

As shown in FIG. 9, some embodiments further provide a user-interface dynamically extensible development system based on software platform, which includes:
a basic dynamic derivation module, configured to, during the operation of the software platform, dynamically extract, by an interface manager, type information relating to forms in a software platform runtime library, and inherit the type information to form a dynamically-derived basic form, and at the same time, generate, by the interface manager, software platform import codes;
   and
a derived-codes obtaining module, configured to, based on the type information in the software platform import codes, generate one-time form dynamic creation codes and store the software platform import codes and the one-time form dynamic creation codes into a file of one-time derived codes.

In some embodiments, the computer device is further configured to, when (N+1)-time derivative modifications are performed on a property and/or call event of the dynamically-derived basic form, create a file of (N+1)-time derived codes, wherein the file of (N+1)-time derived codes comprises file import codes of N-time derived codes, (N+1)-time form dynamic creation codes and/or user codes, and N≥1; and, run the file of the (N+1)time derived codes to form a (N+1)-time derived user interface.

The specific implementation functions of the basic dynamic derivation module and the derivation codes obtaining module can be carried out in a processor or a computer device. For detailed, reference can be made to the above descriptions of the user-interface dynamically extensible development method based on software platform and no redundant descriptions will be made herein.

From angle of hardware processing, an electronic device involved in some embodiments will be described below, but these descriptions do not limit the specific implementation of the electronic device.

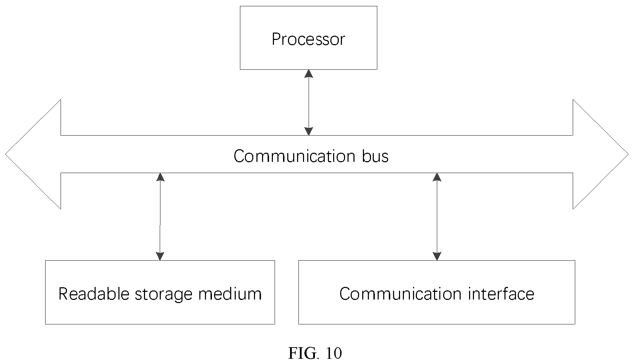

As shown in FIG. 10, this electronic device includes a processor, a readable storage medium, a communication bus, and a communication interface. The processor, the readable storage medium and the communication interface perform mutual communication via the communication bus. The readable storage medium is used to store a program of performing the user-interface dynamically extensible development method based on software platform, and the processor is configured to execute the program of performing the user-interface dynamically extensible development method based on software platform.

In other embodiments, the computer device and the industrial control computer may also be one electronic device.

The structures shown in FIG. 10 does not constitute any limitation to the electronic device, and the electronic device may further include more or less components than shown in the drawings or combine some components or have different component deployments.

In some embodiments, the communication interface may be RS232, RS485, USB interface or TYPE interface or the like, which may be connected with an external bus adapter. The communication interface may also include wired or wireless network interface. The network interface may optionally include wired interface and/or wireless interface (such as WI-FI interface, Bluetooth interface and the like), which is usually used to establish communication connection between the server and other computer devices.

The readable storage medium or the computer readable storage medium includes at least one type of memories. The memory includes flash memory, harddisk drive, multimedia card, card type memory (e.g. SD memory or the like), magnetic memory, magnetic disk or compact disk or the like. In some embodiments, the memory may be an internal storage unit in the computer device, for example, a harddisk drive of the computer device. In some other embodiments, the memory may also be an external storage device of the computer device, for example, a plug type hard disk drive, a smart media card (SMC), a secure digital (SD) card, a flash card or the like on the computer device. Furthermore, the memory may include both the internal storage unit in the computer device and the external storage device. The memory may be used to not only store an application software installed on the computer device and various types of data, for example, the codes of the computer program and the like but also temporarily store data already output or to be output.

In some embodiments, the processor may be a central processing unit (CPU), a processor, a controller, a microcontroller, a microprocessor or another data processing chip, which is used to run the program codes in the memory or process the data, for example, execute the computer program or the like.

In some embodiments, the communication bus may also be an input/output bus, which may be a Peripheral Component Interconnect (PCI) bus, or an Enhanced Industry Standard Architecture (EISA) bus or the like. The bus may include an address bus, a data bus and a control bus and the like.

In some embodiments, A computer device, comprising: a processor; a readable storage medium and a display module electrically connected with the processor; wherein, the readable storage medium is configured to store a program of performing the user-interface dynamically extensible development method based on a software platform; the processor is configured to execute the program to generate a corresponding user interface; and the display module is configured to display the user interface.

Optionally, the computer device may also include a user interface, which may include a display, and an input unit, for example, a keyboard. Optionally, the user interface may also include a standard wired interface and wireless interface. Optionally, in some embodiments, the display may be an LED display, a liquid crystal display, a touch liquid crystal display and an Organic Light-Emitting Diode (OLED) touch display and the like. The display may also be appropriately referred to as display screen or display unit for displaying information processed in the computer device as well as a visual user interface. The processor executes the program to perform the steps in the embodiments of the user-interface dynamically extensible development method based on software platform shown in FIG. 1, for example, the steps S101 to S102 shown in FIG. 1. Alternatively, the processor executes the computer program to achieve the functions of the modules or units in the above apparatus embodiments.

This embodiment further provides a computer readable storage medium storing the program of performing the user-interface dynamically extensible development method based on software platform. The program is executed by the processor to perform the steps of performing the user-interface dynamically extensible development method based on software platform. Reference may be made to the detailed descriptions of the above user-interface dynamically extensible development method based on software platform and no redundant descriptions are made herein. Some embodiments further provide a computer program product, including a computer program or instruction, where the computer program or instruction is executed on a computer to cause the computer to perform any possible user-interface dynamically extensible development method based on software platform as mentioned above.

In the several embodiments provided by the present disclosure, it should be understood that the disclosed device and method can be implemented another way. The above device embodiments are merely illustrative, for example, the flowcharts or block diagrams in the drawings show possible system architectures, functions and operations of the device, method, and computer program product in the several embodiments provided by the present disclosure. Thus, each block in the flowcharts or block diagrams may represent one module, one program fragment or one part of codes. The module, the program fragment or the part of codes includes one or more executable instructions for implementing the specified logic functions. It should be noted that in some alternative embodiments, the functions indicated in the blocks may also be performed in a sequence different from that indicated in the drawings. For example, two continuous blocks can be actually performed basically in parallel, and sometimes may be performed in a reverse sequence, which is dependent on the functions involved. It is further noted that each block in the block diagrams and/or flowcharts and the combinations of the blocks in the block diagrams and/or flowcharts may be implemented by a dedicated hardware-based system for executing specified functions or actions, or by combination of dedicated hardware and computer instructions.

Furthermore, the functional modules in the embodiments of the present disclosure can be integrated into one independent part, or exist as separate modules or two or more of the modules are integrated into one independent part.

The functions, when implemented by software function modules and sold or used as independent products, can be stored in one computer readable storage medium. Based on such understanding, the essence of technical solutions of the present disclosure, or a part contributing to the prior arts or a part of the technical solutions can be embodied in the form of software product. The computer software product is stored in one storage medium which includes several instructions to enable one computer device (for example, a personal computer, a server, or a network device or the like) to perform all or part of the steps of the method of each of the embodiments of the present disclosure.

Enlightened by the ideal embodiments of the present disclosure, relevant workers can, based on the contents of the specification, make various changes and modifications within the scope of protection of the technical idea of the present disclosure. The technical scope of the present disclosure is not limited to the contents of the specification but to the technical scope claimed by the claims.

## Claims

1. A method, comprising:
during the operation of a software platform, dynamically extracting, by an interface manager, type information relating to forms in a software platform runtime library, and inheriting the type information to form a dynamically-derived basic form, and at the same time, generating, by the interface manager, software platform import codes; and
based on the type information in the software platform import codes, generating one-time form dynamic creation codes and storing the software platform import codes and the one-time form dynamic creation codes into a file of one-time derived codes.

2. The method according to claim 1, wherein,
when N+1 derivative modifications are performed on the property and/or call event of the dynamically-derived basic form, a file of (N+1)-time derived codes is created, comprising: file import codes of N-time derived codes, (N+1)-time form dynamic creation codes and/or user codes, wherein, N≥1; and
running the file of the (N+1)-time derived codes to form an (N+1)-time derived user interface.

3. The method according to claim 2, wherein,
during the operation of the software platform, the method of dynamically extracting, by the interface manager, the type information relating to the forms in the software platform runtime library comprises:
introducing a system runtime type information unit into the internal implementation codes of the software platform to use classes and methods relating to the forms in the unit;
using the class of "contextual type of run-time type information" in the system-run-time type information unit to create one context object, and then by a method of "obtaining the type of the run-time type information", obtaining the object of "the run-time type information" of the forms; and
by the object of "the run-time type information" of the forms, using a method of "obtaining property" to obtain the property information of the forms and using a method of "obtaining method" to obtain the method information of the forms.

4. The method according to claim 3, wherein,
the interface manager is used to create, list, design, store, import, export, encrypt and run the user interface.

5. The method according to claim 1, wherein,
the property comprises a visual element and a child element of the forms;
the child element is a function variable and/or behavior characteristic variable of the forms; and
the call event comprises one or more of the following events: a user interaction event, a form life cycle event and a form function event.

6. The method according to claim 5, wherein,
the method of performing derivative modifications on the property and/or call event of the dynamically-derived basic form comprises:
writing the property of the forms by assignment, and forming a call relationship with the user codes; or
by assignment, associating an event handle function with the call event of the forms.

7. The method of claim 6, wherein,
writing the property of the forms by assignment and forming the call relationship with the user codes further comprises:
calling a function library of the forms to construct a corresponding parameter and introducing the parameter into an API function.

8. The method according to claim 6, wherein,
writing the property of the forms by assignment and forming the call relationship with the user codes further comprises:
calling a function library of a user to introduce the property of the forms as a parameter into the API function.

9. The method according to claim 6, wherein,
writing the property of the forms by assignment and forming the call relationship with the user codes further comprises:
calling a function library of the software system to introduce the property of the forms as a parameter into the API function.

10. The method according to claim 6, wherein,
writing the property of the forms by assignment and forming the call relationship with the user codes further comprises:
calling a function library of a code language to introduce the property of the forms as a parameter into the API function.

11. A system, comprising a computer device, wherein the computer device comprises:
a basic dynamic derivation module, configured to, during the operation of a software platform, dynamically extract, by an interface manager, type information relating to forms in a software platform runtime library, and inherit the type information to form a dynamically-derived basic form, and at the same time, generate, by the interface manager, software platform import codes; and
a derived-codes obtaining module, configured to, based on the type information in the software platform import codes, generate one-time form dynamic creation codes and store the software platform import codes and the one-time form dynamic creation codes into a file of one-time derived codes.

12. A computer readable storage medium, configured to store a program of performing the method of any of claims 1-10.

13. An electronic device, comprising a processor, a readable storage medium, a communication bus and a communication interface, wherein the processor, the readable storage medium and the communication interface performs mutual communication by the communication bus; and
the readable storage medium is configured to store a program of performing the method of any of claims 1-10, and the processor is configured to the program of performing the method.

14. A computer device, comprising:
a processor;
a readable storage medium and a display module electrically connected with the processor; wherein,
the readable storage medium is configured to store a program of performing the method of any of claims 1-10;
the processor is configured to execute the program to generate a corresponding user interface; and
the display module is configured to display the user interface.

15. A computer program product, comprising:
a computer program or instruction, wherein the computer program or instruction is executed on a computer to cause the computer to perform the methods of any of claims 1-10.
